# EUROPEAN PATENT SPECIFICATION

(11) **EP 3 282 116 B1**
(45) Date of publication and mention of the grant of the patent: **01.05.2019**
(21) Application number: 17183004.5
(22) Date of filing: 25.07.2017
(51) Int. Cl.: F02K 1/72

(54) **AIRCRAFT GAS TURBINE ENGINE NACELLE**
FLUGZEUGGASTURBINENMOTORGONDEL
NACELLE DE MOTEUR DE TURBINE À GAZ D'AÉRONEF

(30) Priority: 09.08.2016 GB 201613613
(43) Date of publication of application: 14.02.2018
(73) Proprietor: Rolls-Royce plc, London SW1E 6AT (GB)
(72) Inventor: Bond, Jonathan, Derby, Derbyshire DE24 8BJ (GB)
(74) Representative: Rolls-Royce plc

(56) References cited:
- EP-A1- 3 045 707
- WO-A1-2016/059331
- FR-A1- 2 947 869
- GB-A- 2 156 004
- US-A- 4 731 991
- US-A- 4 823 547

## Description

The present disclosure concerns a nacelle for an aircraft gas turbine engine, and in particular, to a nacelle comprising a thrust reverser.

Aircraft gas turbine engines typically comprise thrust reversers configured to provide a thrust component having a reverse flow direction compared to normal flow in forward flight, or to at least provide additional drag, in order to reduce the speed of the aircraft. One known arrangement comprises a "cold stream" thrust reverser, in which blocker doors are deployed to prevent normal flow through the bypass duct rearwardly of the fan, while permitting flow through the engine core. Simultaneously, a sleeve around the perimeter of the nacelle moves axially rearwards, revealing vanes, which redirect bypass air forward, thereby providing reverse thrust. The vanes are typically configured in discrete cascade boxes, with each cascade box typically having an individual arrangement of forward turning vanes.

However, the vanes have a relatively large radial thickness, which may increase the overall thickness of the nacelle, and so increase aerodynamic drag in normal flight. A minimum radial thickness is required, since turning the airflow over a smaller distance may generate turbulence. Consequently, there is a need to provide an aircraft gas turbine engine nacelle which overcomes or ameliorates the above problems.

US patent publication US4823547 discloses a cowl structure of a gas turbine engine having a cascade comprising a pair of rectangular frames which are joined by vanes. The vanes are pivotably connected to the frames in the manner of parallel rules as used in navigation. When non operative, the frames are stowed in superimposed relationship and thus enable a thinner cowl to be utilized than is possible in known cascade storage arrangements.

UK patent publication GB2156004 discloses an exhaust duct thrust modulation device which includes a converging/diverging nozzle, a plurality of reverse flow cascade vanes in a frame, and a plurality of blocker flaps each pivotally connected to the nozzle. The frame is connected at its aft end to the nozzle and is slideably connected at its forward end to the exhaust duct. The nozzle and frame are thereby axially translatable with respect to the engine so that in a forward stowed position, substantially all of the engine exhaust flow stream passes through the exit area and in an aft deployed position the blocker flaps cooperate with the cascades to direct a portion of the flow stream through the cascade vanes. The nozzle may be variable and the converging section of the nozzle cooperates with the blocker flap to increase the flow stream through the cascade vanes when the reverser is deployed.

US patent publication US4731991 discloses a ducted fan gas turbine engine having a fan cowling member made up of a static portion and an axially translatable portion. A plurality of rails interconnect the first and second cowling member portions and carry a generally annular array of airflow deflector vanes. The deflector vanes are normally stowed in stacked relationship when the cowling portions are contiguous but are equally axially spaced apart to define a fan air flow thrust reverser when the second cowling portion has been translated to a position downstream of the first cowling portion.

French patent publication FR2947869 discloses an aircraft gas turbine engine thrust reverser having a grid of thrust reverser vanes. The grid has two modules respectively holding two opposite vanes at two ends of two supports, where the grid is telescopic and extensible. The modules are moved and slidingly assembled with respect to each other. A rail is cooperated with the support.

International patent publication WO2016059331 a deployable grille with fins for a thrust-reversal system for an aircraft turbine engine. The grille can adopt a rest position and a deployed, active position in which the fins are axially spaced further apart than in the rest position. At least between two fins, the grille comprises resilient return means forcing the two fins to move apart axially from one another.

European patent publication EP3045707 discloses a cascade apparatus which includes a fixed frame having a plurality of fixed vanes coupled to the frame, where each of the fixed vanes defines a plurality of slots. A plurality of movable vanes intersects the fixed vanes to form a reverse thrust flow path and slidably coupled to the fixed vanes via the slots. The movable vanes slide relative to the fixed vanes between a first position to provide a first reverse thrust and a second position to provide a second reverse thrust different from the first reverse thrust.

According to a first aspect of the invention there is provided an aircraft gas turbine engine nacelle comprising a thrust reversal arrangement, the thrust reversal arrangement comprising:
at least one thrust reverser cascade box comprising a fixed structure and a plurality of thrust reverser vanes configured to direct bypass air forwardly;
a subset of the thrust reverser vanes being pivotable relative to the fixed structure between a deployed position, in which the pivotable vanes define a first volume, and a stowed position, in which the pivotable vanes define a second, smaller volume, characterised in that a further subset of the vanes comprise fixed vanes which are fixed relative to the fixed structure, the pivotable vanes being located downstream in fan flow relative to the fixed vanes.

By providing cascade boxes having pivotable thrust reverser vanes, the volume of the vanes can be relatively small when stowed, and sufficiently large when deployed to provide effective airflow turning.

The vanes may define a first radial extent when in the deployed position, and a second radial extent when in the stowed position, the second radial extent being smaller than the first radial extent.

It has been found by the inventors that it is particularly aerodynamically beneficial to reduce the nacelle thickness at an axial position corresponding to a downstream portion of the thrust reverser cascades. Furthermore, at this position, the blocker doors provide some flow redirection, and so the forces on the vanes at this position are less than at the upstream vanes. Consequently, these vanes can be more readily made pivotable, since lower forces are incumbent on them in operation relative to the forward vanes.

The nacelle may comprise an aft cowl, which may be moveable between a forward stowed position and a rearward deployed position. The aft cowl may comprise radially inner and outer walls defining a hollow portion therebetween. The pivotable thrust reverser vanes may be at least partly located within the hollow portion when the aft cowl is in the stowed position. The radially outer wall may comprise a guide member configured to engage against the pivotable thrust reverser vanes to move them from the deployed to the stowed position when the aft cowl is moved from the deployed to the stowed position. Advantageously, the pivotable vanes can be moved from the deployed to the stowed position using existing actuators, thereby providing a reliable, low cost actuation method.

The pivotable vanes may comprise a pivot point located such that the pivotable vanes are pivotable about a radially inner end. The pivot point may be located radially inwardly of an aerodynamic centre of pressure of the pivotable vanes in use. Advantageously, the pivotable vanes are automatically moveable from the stowed position to the deployed position by airflow through the cascade boxes.

The cascade box may comprise one or more stops positioned so as to engage against an axially rearward side of a forwardly adjacent vane when the respective vane is in the deployed position. The one or more stops may be positioned to engage against a forward side of a rearwardly adjacent vane when the respective vane is in the stowed position. Advantageously, a single stop per pivotable vane can be employed to ensure that the pivotable vanes assume a desired angle when in the deployed position to ensure efficient thrust reversal, and to provide clearance between the vanes when in the stowed position.

Alternatively or in addition, the thrust reversal arrangement may comprise a vane actuator configured to move the pivotable vanes between the stowed and deployed positions. Advantageously, vibration of the pivotable vanes may be prevented.

The vane actuator may comprise a follower arm coupled to an aft cowl actuator. Alternatively, the vane actuator may be configured to actuate the pivotable vanes independently of the aft cowl actuator. Consequently, the vane positions can be adjusted independently of the aft cowl position, thereby permitting variation of the thrust reverser vane angle independently of aft cowl deployment. Consequently, reverse thrust vector and so reverse thrust level can be actively and promptly modulated, without adjusting core rotational speed.

At least a subset of the pivotable vanes may be located forwardly of a radially outer external surface of the aft cowl and rearwardly of a radial outer surface of a forward cowl when in the stowed position. Consequently, the vanes define the ambient airwashed nacelle external surface, thereby reducing weight and reducing the radial extent of the nacelle outer surface.

Where the thrust reversal arrangement comprises a pivotable vane actuation arrangement, the pivot point may be provided at a radial position corresponding to the aerodynamic centre of pressure. Advantageously, loads on the actuator are reduced.

According to a second aspect of the invention there is provided an aircraft comprising a gas turbine engine nacelle in accordance with the first aspect of the invention.

The skilled person will appreciate that except where mutually exclusive, a feature described in relation to any one of the above aspects of the invention may be applied mutatis mutandis to any other aspect of the invention.

Embodiments of the present disclosure will now be described by way of example only, with reference to the figures, in which:
**figure 1** is a sectional side view of a gas turbine engine;
**figure 2** is a schematic sectional side view of a first thrust reverser of a nacelle, according to the present invention, suitable for the gas turbine engine of figure 1 in a deployed position;
**figure 3** is a schematic sectional side view of the thrust reverser of figure 2 in a stowed position;
**figure 4** is a schematic sectional side view of part of a second thrust reverser of a nacelle, according to the present invention, suitable for the gas turbine engine of figure 1 in a deployed position;
**figure 5** is a schematic sectional side view of the thrust reverser of figure 4 in a stowed position;
**figure 6** is a schematic sectional side view of part of a third thrust reverser of a nacelle, a according to the present invention, suitable for the gas turbine engine of figure 1 in a deployed position;
**figure 7** is a schematic sectional side view of the thrust reverser of figure 6 in a stowed position;
**figure 8** is a schematic sectional side view of part of a fourth thrust reverser of a nacelle, not falling under the presently claimed invention, suitable for the gas turbine engine of figure 1 in a deployed position;
**figure 9** is a schematic sectional side view of the thrust reverser of figure 8 in a stowed position;
**figure 10** shows a close-up view of region A of the thrust reverser of figure 8 in the stowed position; and
**figure 11** shows a close-up view of region A of the thrust reverser of figure 8 in the deployed position.

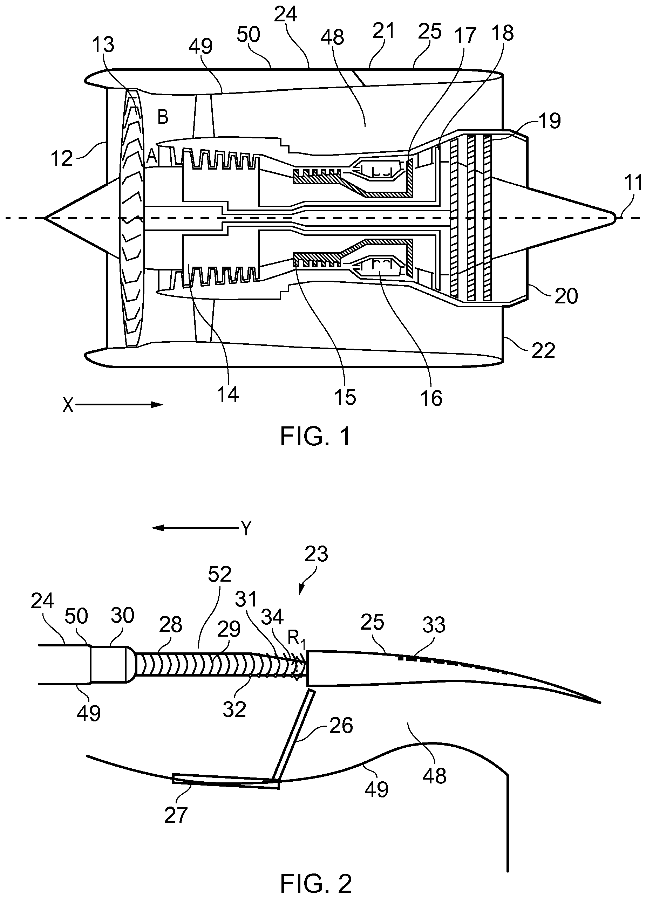

With reference to figures 1 to 3, a gas turbine engine having a first thrust reversal arrangement is generally indicated at 10. As shown in figure 1, the engine 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and a core exhaust nozzle 20. A bypass nacelle 21 generally surrounds the engine 10 and defines both the intake 12 and the fan exhaust nozzle 22 and also defines a hot core stream outlet 20 at an aft end thereof. The nacelle 21 incorporates a thrust reverser arrangement 23 within an aft part thereof.

The gas turbine engine 10 works in the conventional manner so that air entering the intake 12 is accelerated by the fan 13 to produce two air flows: a first air flow A into the intermediate pressure compressor 14 and a second air flow B which passes through a bypass duct 48 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

In normal forward flight, the engine 10 is configured such that exhaust flows from the fan exhaust nozzle 22 and engine core nozzle 22 are directed in first axial direction X, shown in figures 1 and 2. The direction X also defines a rearward direction being generally opposite to a forward flight direction.

Referring to figure 2, a first thrust reverser arrangement 23 is shown, which is configured to block normal flow in the direction X through the fan exhaust nozzle 22, and provide airflow having an axially forward component Y (i.e. having a component in an opposite direction to the first axial direction X) when actuated. In general, air is also directed in a radial direction when the thrust reverser arrangement 23 is in operation.

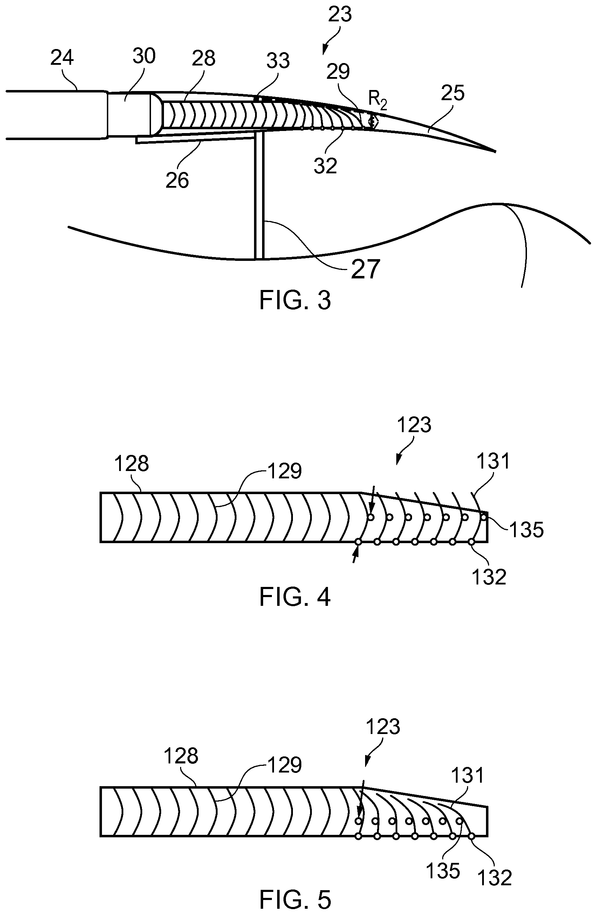

The arrangement comprises a forward cowl 24, which is fixed. The forward cowl 24 comprises a radially inner wall 49 and a radially outer wall 50. Rearwardly of the forward cowl 24 is an aft cowl 25 (also known as a "transcowl"), which is axially moveable relative to the forward cowl 24 between a forward, stowed position (as shown in figures 1 and 3) and a rearward, deployed position (as shown in figure 2).

When in the stowed position, the forward and aft cowls 24, 25 abut one another, such that air flows through the bypass duct 22 and out through the primary fan exhaust nozzle 22. When deployed, the aft cowl 25 is moved rearwardly, such that an annular gap 52 is opened in the nacelle 21 between the forward and aft cowls 24, 25. Simultaneously, blockers doors 26 are moved into a deployed position (again shown in figure 2), such that the nozzle 22 is blocked by the door 26. Drag links 27 attached to the blocker doors 26 support the blocker doors 26 when in the deployed position. Consequently, airflow is caused to flow out the annular gap 52 between the forward 24 and aft 25 cowls.

A thrust reverser cascade box 28 is provided. The thrust reverser cascade box is located in the gap 52 when the aft cowl 25 and blocker doors 26 are deployed. In general, a plurality of thrust reverser cascade boxes 28 are provided, distributed circumferentially around the nacelle 21. Each thrust reverser cascade box 28 comprises a plurality of vanes. A subset of these vanes comprise fixed thrust reverser vanes 29, which are configured to direct air exiting through the cascades 28 out of the annular gap 52 in a radially outward and axially forward direction Y, i.e. in a direction having a forward component, opposite to the direction X. Each thrust reverser vane 29 extends in a generally circumferential direction and in a radial direction, and turns from a generally radial direction at a radially inner end toward a generally axially forwardly direction at a radially outer end, such that air exiting through the gap 52 is turned forwardly.

The fixed cascade vanes 29 are located at a forward portion of the cascade box 28, extending from a forward mounting 30 which provides a fixed structure for the cascade box 28. A further subset of vanes comprises a plurality of pivotable thrust reverser vanes 31, which are provided downstream in fan flow B of the fixed cascade vanes 29 at a rear portion of the cascade box 28. The pivotable vanes 31 are pivotable between a deployed position (shown in figure 2), and a stowed position (shown in figure 3). Again, the vanes 31 extend in a generally circumferential direction and in a radial direction, and turn from a generally radial direction at a radially inner end toward a generally axially forwardly direction at a radially outer end, such that air exiting through the gap 52 is turned forwardly.

When in the deployed position, each pivotable vane 31 defines a first radial extent R₁ defined by a radial distance between a radially inner and a radially outer end of a respective vane 31. When in the stowed position, the pivotable vanes 31 each define a second radial extent R₂ defined by the radial distance between a radially inner and a radially outer end. As can be seen from figures 2 and 3, the first radial extent R₁ is greater than the second radial extent R₂. In view of the smaller second radial extent R₂, the pivotable vanes 31 occupy a smaller volume when in the stowed position that when in the deployed position. The pivotable vanes 31 are pivotable at a pivot point defined by a hinge 32 located at a radially inner end of each vane 31. Each hinge 32 allows free pivoting movement of a respective pivotable vane 31.

Each cascade box 28 comprises an axially extending side wall 34, which extends from the forward end to the rearward end. The side wall 34 extends axially in a radial plane, and defines an outer extent which thins toward an aft end, as shown in figure 2, such that the pivotable vanes 31 have a greater radial extent than the side wall 34 at the aft end. Consequently, vanes 31 radially project from a radially outer end of the side wall 34.

The aft cowl 25 comprises a guide member in the form of a rail 33 (shown by dotted lines in figures 2 and 3, though it will be understood that the rail 33 is generally continuous), which is mounted to an internal side of a radially outer surface of the cowl 25.

In use, when transitioning from the deployed position (shown in figure 2) to the stowed position (shown in figure 3), the aft cowl 25 translates forwardly, and the blocker doors 26 and drag links 27 return to their stowed positions. As the aft cowl 25 translates forwardly, the rail 33 engages against a radially outer end of a rearward surface of each pivotable vane 31, at a point radially outwardly of the side wall 34. As the aft cowl 25 further translates forwardly, the vanes 31 are pivoted such that a radially outer end moves forwardly, thereby pivoting the vanes 31 to the stowed position. The cowl 25 continues to translate forwardly until the cowls 24, 25 abut, and the nacelle 21 is thereby in the stowed position. As can be seen, different vanes 31 at different axial positions may pivot to a different extent, thereby defining a different radial extent relative to one another. This is because of the shape of the rail 33, which generally has a greater radial extent at a forward end relative to a rearward end.

When moving from the stowed position to the deployed position, the aft cowl 25 moves rearwardly from the stowed position, in which the cowls 24, 25 abut. As the aft cowl 25 moves toward the deployed position, the rail 33 disengages from the vanes 31, thereby allowing free movement of the vanes 31. Meanwhile, the blocker door 26 and drag link 27 move to their deployed positions, thereby redirecting bypass airflow B through the annular gap 52, and through the vanes 31. Since the hinges 32 are located at a radially inner end of the vanes 31, the airflow causes the vanes 31 to rotate such that the radially outer ends move rearwardly, and so the vanes are moved to the deployed position. As will be understood, this is a consequence of the hinges 32 being located at a radially inward end of the vanes, 31, i.e. radially inwardly of a centre of pressure of the respective vane 31. Consequently, since the vanes 31 are shaped to redirect air forwardly, airflow through the vanes 31 causes them to pivot to the deployed position. It will be understood thereby that this effect will be achieved provided the hinges 32 are located radially inwardly of the centre of pressure of the respective vane 31, and need not be located at a radially inner extremity.

Consequently, the vanes 31 are moved between the deployed and stowed positions without a requirement for further actuation mechanisms, save for the rail 33. In some instances, the rail could be omitted, the inner surface of the aft cowl acting as an actuator.

Figures 4 and 5 show a second thrust reverser arrangement 123 for the gas turbine engine 10 in a deployed position and a stowed position respectively. The thrust reverser arrangement 123 is similar to the arrangement 23, with only differences being described. The thrust reverser arrangement 123 comprises a cascade box 128 comprising forward fixed vanes 129 and rearward pivotable vanes 131. Each pivotable vane comprises a hinge 132 to provide pivoting movement.

The cascade further comprises a plurality of stops 135, with one stop 135 being provided rearwardly of each pivotable vane 131. As shown in figure 4, the stops 135 are positioned such that a rearward surface of a forwardly adjacent vane 131 engages against a respective stop 135 when the arrangement 123 is in the deployed position. Consequently, spacing between adjacent vanes 131 is ensured to enable flow to progress between adjacent vanes 131. An aft cowl (not shown) having a rail (not shown) is provided, which engages against the vanes 129 to move them between the stowed and deployed positions, as in the first arrangement 23.

As shown in figure 5, the stops 135 are positioned such that a forward surface of a rearwardly adjacent vane 131 engages against a respective stop 135 when the arrangement 123 is in the stowed position. Consequently, a spacing is ensured when the arrangement 123 is in the stowed position, which may prevent damage to the radially outer ends of the vanes 131 when in the stowed position.

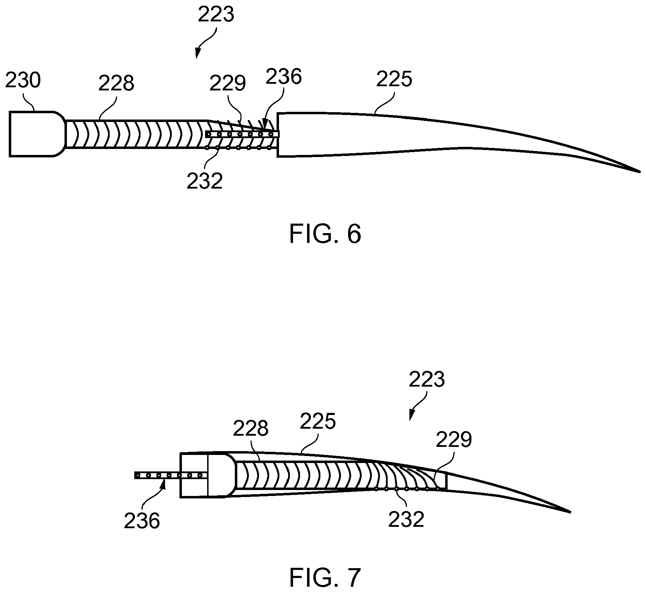

Figures 6 and 7 show a third thrust reverser arrangement 223 for the gas turbine engine 10 in a deployed position and a stowed position respectively. The thrust reverser arrangement 223 is similar to the arrangement 23, with only differences being described. The thrust reverser arrangement comprises a cascade box 228 comprising forward fixed vanes 229 and rearward pivotable vanes 231. Each pivotable vane comprises a hinge 232 to provide pivoting movement.

A different actuation arrangement is provided to move the pivotable vanes 229 between the stowed and deployed positions. The aft cowl comprises a follower arm 236 which is fixedly mounted thereto, and therefore moves with the aft cowl 225 when it moves between the deployed and stowed positions.

When in the deployed position (shown in figure 6), the follower arm 236 engages against a forward side of each vane 229, to thereby urge the respective vane 229 toward a deployed position. Similarly, when moved toward the stowed position, the follower arm 236 engages against a rearward surface to urge the respective vane 229 to the stowed position. Consequently, the vanes 229 can be moved between the stowed and deployed positions without requiring a further actuator, but without relying on airflow through the cascade box 228 to ensure correct positioning.

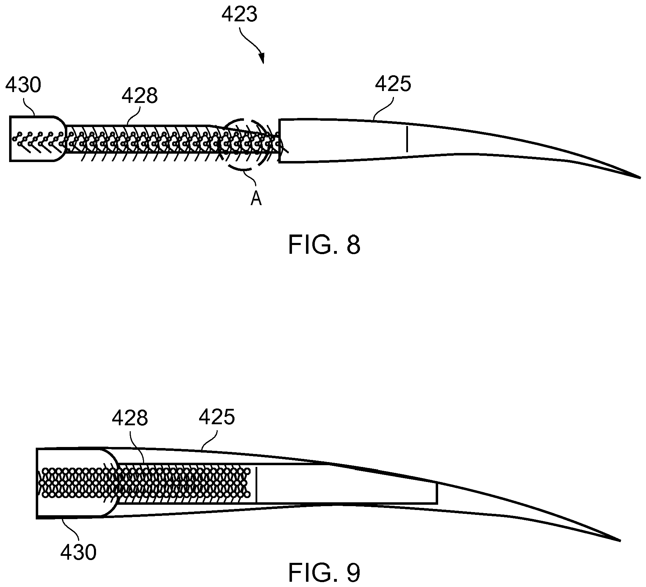

Figures 8 and 9 show a fourth thrust reverser arrangement 423 comprising a cascade box 428, fixed structure 430 and aft cowl 425 in a deployed and a stowed position respectively. Again, the thrust reverser arrangement is similar to that of the previous arrangements, except that the vanes are hinged in a different way, and are translatable.

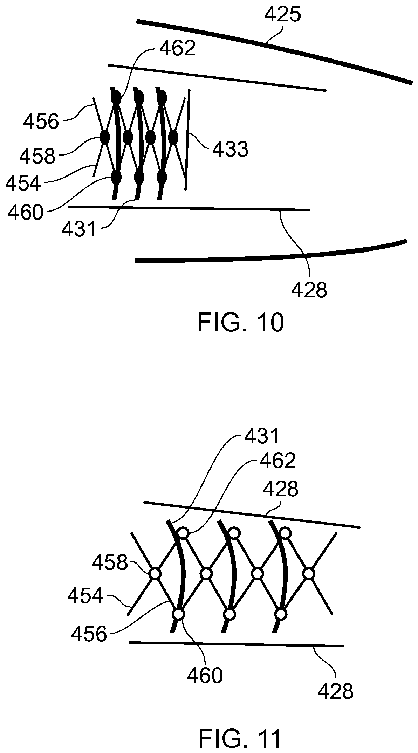

Figure 11 shows a close-up of the area A of figure 8. As can be seen, a plurality of translatable vanes 431 are provided. Each translatable vane 431 is mounted to a scissors mechanism comprising first and second arms 454, 456. The first and second 454, 456 arms are linked by a first pivot point 458 at an intermediate point of each arm 454, 456. Each arm 454, 456 is also linked to a first and second further second arm at distal ends thereof by second and third pivot points 460, 462. Consequently, movement of any of the arms 454, 456 causes axial movement of the remainder of the arms 454, 456, and thereby causes axial movement of the translatable vanes 431, in a manner similar to a pantograph mechanism. As will be understood, the pivot points 460, 462 may be offset axially, such that the vanes 431 pivot as they are translated.

The translatable vanes 431 are pivotably mounted to the second pivot points 460, and are slidable relative to the third pivot points 462. Consequently, when moved from the deployed to the stowed position, the vanes 431 have a smaller axial extent, and so occupy a smaller volume, as shown in figure 10.

The translatable vanes 431 are actuated by a guide rail 433 mounted to the aft cowl 425. In operation, the guide rail 433 engages against rearwardmost first and second arms 454, 456 when the aft cowl 425 is moved from the deployed position to the stowed position, thereby translating the vanes 431 forwardly. Similarly, where the aft cowl 425 is moved from the stowed to the deployed position, the guide rail 433 disengages from the first and second arms 454, 456. Air from the bypass passage acts against the vanes 431 to translate them rearwardly to the deployed position. Alternatively, the guide rail 433 may be fixed to the first and second arms 431, such that the vanes 431 are directly actuated by movement of the aft cowl 425.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, the radially outer surface of the aft cowl could be omitted, or may extend such that the aft and forward cowls do not abut when in the stowed position. Consequently, a rearward surface of the pivotable cascade vanes could provide an external air-washed surface of the nacelle. Advantageously, the nacelle depth and weight would be reduced.

A separate actuator may be provided, which may actuate each pivotable vane independently of the aft cowl, blocker door and drag link actuator. A separate actuator could be provided for each vane, or a single actuator could be provided for a plurality of pivotable vanes. Consequently, the vanes could be adjusted to control reverse thrust efflux vector, thereby providing additional reverse thrust control.

## Claims

1. An aircraft gas turbine engine nacelle (21) comprising a thrust reversal arrangement (23), the thrust reversal arrangement comprising:
at least one thrust reverser cascade box (28) comprising a fixed structure (30) and a plurality of thrust reverser vanes (29, 31) configured to direct bypass air forwardly;
a subset of the thrust reverser vanes (31) being pivotable relative to the fixed structure (30) between a deployed position, in which the pivotable vanes (31) define a first volume, and a stowed position, in which the pivotable vanes (31) define a second volume smaller than the first volume, **characterised in that** a further subset of the vanes comprise fixed vanes (29) which are fixed relative to the fixed structure (30), the pivotable vanes (31) being located downstream in fan flow relative to the fixed vanes (29).

2. A nacelle according to claim 1, wherein the vanes of the subset of the thrust reverser vanes define a first radial extent when in the deployed position, and a second radial extent when in the stowed position, the second radial extent being smaller than the first radial extent.

3. A nacelle according to any of the preceding claims, wherein the nacelle (21) comprises an aft cowl (25) which is moveable between a forward stowed position and a rearward deployed position.

4. A nacelle according to claim 3, wherein the aft cowl (25) comprises radially inner and outer walls defining a hollow portion therebetween, and the pivotable thrust reverser vanes (29, 31) are located within the hollow portion when the aft cowl (25) is in the stowed position.

5. A nacelle according to claim 4, wherein the radially outer wall comprises a guide member (33) configured to engage against the thrust reverser vanes (29, 31) to move them from the deployed to the stowed position when the aft cowl (25) is moved from the deployed to the stowed position.

6. A nacelle according to any of the preceding claims, wherein the pivotable vanes (31) comprise a pivot point (32) located such that the pivotable vanes (31) are pivotable about a radially inner end.

7. A nacelle according to claim 6, wherein the pivot point (32) is located radially inwardly of an aerodynamic centre of pressure of the pivotable vanes (31) in use.

8. A nacelle according to any of the preceding claims, wherein the cascade box (128) comprises one or more stops (135) positioned so as to engage against an axially rearward side of a forwardly adjacent vane (131) when the respective vane (131) is in the deployed position.

9. A nacelle according to any of the preceding claims, wherein the thrust reversal arrangement comprises a pivotable vane actuator (236) configured to move the pivotable vanes (231) between the stowed and deployed positions.

10. A nacelle according to claim 3 or any claim dependent thereon, wherein at least a subset of the pivotable vanes (31) is located forwardly of a radially outer external surface of the aft cowl and rearwardly of a radial outer surface (50) of a forward cowl (24) when in the stowed position.

11. An aircraft comprising a gas turbine engine nacelle (21) in accordance with any of the preceding claims.

## Patentansprüche

1. Flugzeuggasturbinenmotorgondel (21), umfassend Schubumkehranordnung (23), wobei die Schubumkehranordnung umfasst:
mindestens einen Schubumkehrkaskadenkasten (28), umfassend eine befestigte Struktur (30) und eine Vielzahl von Schubumkehrblättern (29, 31), die konfiguriert sind, um Bypass-Luft nach vorne zu leiten;
wobei eine Untergruppe der Schubumkehrblätter (31) zwischen einer Einsatzposition, in der die schwenkbaren Blätter (31) ein erstes Volumen definieren, und einer Verstauposition, in der die schwenkbaren Blätter (31) ein zweites Volumen definieren, das kleiner als das erste Volumen ist, relativ zur befestigten Struktur (30) schwenkbar ist, **dadurch gekennzeichnet, dass** eine weitere Untergruppe der Blätter befestigte Blätter (29) umfasst, die relativ zur befestigten Struktur (30) befestigt sind, wobei die schwenkbaren Blätter (31) in Bläserstromrichtung stromabwärts relativ zu den befestigten Blättern (29) positioniert sind.

2. Gondel nach Anspruch 1, wobei die Blätter der Untergruppe der Schubumkehrblätter ein erstes radiales Maß in der Einsatzposition und ein zweites radiales Maß in der Verstauposition definieren, wobei das zweite radiale Maß kleiner als das erste radiale Maß ist.

3. Gondel nach einem der vorstehenden Ansprüche, wobei die Gondel (21) eine rückwärtige Haube (25) umfasst, die zwischen einer vorderen Verstauposition und einer hinteren Einsatzposition bewegt werden kann.

4. Gondel nach Anspruch 3, wobei die rückwärtige Haube (25)
radial innere und äußere Wände umfasst, die einen hohlen Abschnitt dazwischen definieren, und die schwenkbaren Schubumkehrblätter (29, 31) im hohlen Abschnitt positioniert sind, wenn sich die rückwärtige Haube (25) in der Verstauposition befindet.

5. Gondel nach Anspruch 4, wobei die radial äußere Wand ein
Führungselement (33) umfasst, das zur Ineingriffnahme der Schubumkehrblätter (29, 31) konfiguriert ist, um sie aus der Einsatzposition in die Verstauposition zu bewegen, wenn die rückwärtige Haube (25) von der Einsatzposition in die Verstauposition bewegt wird.

6. Gondel nach einem der vorstehenden Ansprüche, wobei die schwenkbaren Blätter (31) einen Schwenkpunkt (32) umfassen, der so positioniert ist, dass die schwenkbaren Blätter (31) um ein radial inneres Ende schwenkbar sind.

7. Gondel nach Anspruch 6, wobei der Schwenkpunkt (32) radial
einwärts bezüglich eines aerodynamischen Druckzentrums der schwenkbaren Blätter (31) in Gebrauch positioniert ist.

8. Gondel nach einem der vorstehenden Ansprüche, wobei der Kaskadenkasten (128) ein oder mehrere Anschläge (135) umfasst, die so positioniert sind, dass sie eine axial rückwärtige Seite eines vorne angrenzenden Blatts (131) in Eingriff nehmen, wenn sich das jeweilige Blatt (131) in der Einsatzposition befindet.

9. Gondel nach einem der vorstehenden Ansprüche, wobei die Schubumkehranordnung ein Betätigungselement (236) für die schwenkbaren Blätter umfasst, das konfiguriert ist, um die schwenkbaren Blätter (231) zwischen der Verstau- und der Einsatzposition zu bewegen.

10. Gondel nach Anspruch 3 oder einem davon abhängigen Anspruch, wobei
mindestens eine Untergruppe der schwenkbaren Blätter (31) in der Verstauposition vor einer radial äußeren Oberfläche der rückwärtige Haube und hinter einer radial äußeren Oberfläche (50) einer vorwärtigen Haube (24) positioniert ist.

11. Flugzeug, umfassend eine Gasturbinenmotorgondel (21) gemäß einem der vorstehenden Ansprüche.

## Revendications

1. Nacelle (21) de moteur à turbine à gaz d'aéronef comprenant un agencement d'inversion de poussée (23), ledit agencement d'inversion de poussée comprenant :
au moins un boîtier en cascade d'inverseur de poussée (28) comprenant une structure fixe (30) et une pluralité d'aubes d'inverseur de poussée (29, 31) conçues pour diriger l'air de dérivation vers l'avant ;
un sous-ensemble des aubes d'inverseur de poussée (31) pouvant pivoter par rapport à la structure fixe (30) entre une position déployée, dans laquelle les aubes pivotantes (31) définissent un premier volume, et une position repliée, dans laquelle les aubes pivotantes (31) définissent un second volume inférieur au premier volume, **caractérisé en ce qu'**un sous-ensemble d'aubes supplémentaire comprend des aubes fixes (29) qui sont fixes par rapport à la structure fixe (30), les aubes pivotantes (31) étant situées en aval de l'écoulement de soufflante par rapport aux aubes fixes (29).

2. Nacelle selon la revendication 1, lesdites aubes du sous-ensemble des aubes d'inverseur de poussée définissent une première étendue radiale lorsqu'il est en position déployée, et une seconde étendue radiale lorsqu'il est en position repliée, ladite seconde étendue radiale étant inférieure à la première étendue radiale.

3. Nacelle selon l'une quelconque des revendications précédentes, ladite nacelle (21) comprenant un capot arrière (25) pouvant être déplacé entre une position repliée vers l'avant et une position déployée vers l'arrière.

4. Nacelle selon la revendication 3, ledit capot arrière (25) comprenant
des parois interne et externe radialement définissant une partie creuse entre elles et lesdites aubes pivotantes (29, 31) d'inverseur de poussée étant situées à l'intérieur de la partie creuse lorsque le capot arrière (25) est dans la position repliée.

5. Nacelle selon la revendication 4, ladite paroi externe radialement comprenant un élément de guidage (33) conçu pour se mettre en prise avec les aubes (29, 31) d'inversion de poussée pour les déplacer de la position déployée vers la position repliée lorsque le capot arrière (25) est déplacé de la position déployée vers la position repliée.

6. Nacelle selon l'une quelconque des revendications précédentes, lesdites aubes pivotantes (31) comprenant un point de pivot (32) situé de sorte que les aubes pivotantes (31) puissent pivoter autour d'une extrémité interne radialement.

7. Nacelle selon la revendication 6, ledit point de pivot (32) étant situé
radialement vers l'intérieur d'un centre de pression aérodynamique des aubes pivotantes (31) lors de l'utilisation.

8. Nacelle selon l'une quelconque des revendications précédentes, la boîte en cascade (128) comprenant une ou plusieurs butées (135) positionnées de façon à se mettre en prise avec un côté vers l'arrière axialement d'une aube adjacente vers l'avant (131) lorsque l'aube respective (131) est dans la position déployée.

9. Nacelle selon l'une quelconque des revendications précédentes, ledit agencement d'inversion de poussée comprenant un actionneur d'aubes pivotant (236) conçu pour déplacer les aubes pivotantes (231) entre les positions repliée et déployée.

10. Système selon la revendication 3 ou l'une quelconque des revendications dépendantes de celle-ci, au moins un sous-ensemble des aubes pivotantes (31) étant situé à l'avant d'une surface extérieure externe radialement du capot arrière et à l'arrière d'une surface externe radiale (50) d'un capot avant (24) lorsqu'il est dans la position repliée.

11. Aéronef comprenant une nacelle de moteur à turbine à gaz (21) selon l'une quelconque des revendications précédentes.
